**Europäisches Patentamt**

**European Patent Office**

**Office européen des brevets**

(11) Publication number: **0 138 378**
**B1**

## (12) EUROPEAN PATENT SPECIFICATION

(45) Date of publication of patent specification: **28.10.87**

(21) Application number: **84306221.7**

(22) Date of filing: **12.09.84**

(51) Int. Cl.⁴: **F 16 D 23/06**

(54) Synchromesh clutch.

(30) Priority: **22.09.83 GB 8325426**
**29.02.84 GB 8405299**

(43) Date of publication of application:
**24.04.85 Bulletin 85/17**

(45) Publication of the grant of the patent:
**28.10.87 Bulletin 87/44**

(84) Designated Contracting States:
**BE DE FR GB IT SE**

(56) References cited:
**FR-A-1 098 083**
**FR-A-2 466 668**
**GB-A-1 280 299**
**US-A-3 419 120**

(73) Proprietor: **J.I. Case Europe Limited**
**Cardrew Industrial Estate**
**Redruth Cornwall TR15 1ST (GB)**

(72) Inventor: **Scott, Brian**
**Old Tupton, Bradshaw Lane**
**Bradshaw, Halifax, West Yorkshire (GB)**
Inventor: **Standing, Bryan Neil**
**Mavendale 34b Rowley Lane**
**Lepton Huddersfield West Yorkshire (GB)**

(74) Representative: **Norcliffe, Kenneth Adrian**
**Patents & Trade Marks Department Case**
**Tractors formerly David Brown Tractors Limited**
**Meltham Huddersfield, West Yorkshire,**
**HD7 3AR (GB)**

Courier Press, Leamington Spa, England.

# Description

The invention relates to a synchromesh clutch of the general type used in vehicle stepped ratio-change gearboxes and including a toothed clutch the engagement of which is balked until synchronisation has been substantially achieved by the prior engagement of a friction clutch.

A synchromesh clutch is known in accordance with the prior art portion of claim 1 (GB—A—1280299) comprising a sleeve having internal clutch teeth adapted to engage slideably with external clutch teeth on hub means fixed to a shaft and to be engageable with external clutch teeth on a gear rotateable on the shaft, an external flange on the sleeve having a peripheral groove adapted to be engaged by a selector fork, a plurality of circumferentially-spaced holes through the flange, a plurality of pins each of which passes with limited clearance through one of the holes and has a reduced diameter portion defining a balking shoulder capable of contacting the edge of that end of the associated hole adjacent the gear, a cone clutch element fixed to those ends of the pins adjacent the gear and adapted to be engageable with a mating cone clutch element fixed to the gear, and a set of substantially W-shaped springs the central depression of each of which engages one of the balking shoulders. The ends of each of said springs bear against the ends of one of a plurality of transverse slots milled in the sleeve.

The word "fixed" wherever used herein is intended to mean "rigidly secured to or integral with".

We have found that endwise location of the springs by the ends of the respective slots hinders the synchronising action of the cone clutch elements, and the principal object of the present invention is to allow faster synchronisation and thus a "cleaner" gear change.

According to the invention, a synchromesh clutch comprising a sleeve having internal clutch teeth adapted to engage slideably with external clutch teeth on hub means fixed to a shaft and to be engageable with external clutch teeth on a gear rotateable on the shaft, an external flange on the sleeve having a peripheral groove adapted to be engaged by a selector fork, a plurality of circumferentially-spaced holes through the flange, a plurality of pins each of which passes with clearance through one of the holes and has a reduced diameter portion defining a balking shoulder capable of contacting the edge of that end of the associated hole adjacent the gear, a friction clutch element fixed to those ends of the pins adjacent the gear and adapted to be engageable with a mating friction clutch element fixed to the gear, and a set of substantially W-shaped springs the central depression of each of which engages one of the balking shoulders, is characterised in that the ends of each of said springs engage the base of a plain annular groove in the sleeve so that the springs can float circumferentially.

The invention will now be described, by way of example only, with reference to the accompanying drawings of which:

Fig. 1 is a sectional side elevation of a preferred embodiment of synchromesh clutch for a vehicle stepped ratio-change gearbox;

Fig. 2 is a section on the line 2—2 in Fig. 1;

Fig. 3 is a sectional side elevation of another embodiment of synchromesh clutch for a vehicle stepped ratio-change gearbox;

Fig. 4 is a sectional side elevation of a modified synchromesh clutch above its axis; and

Fig. 5 shows a minor alternative in the clutch of Fig. 4.

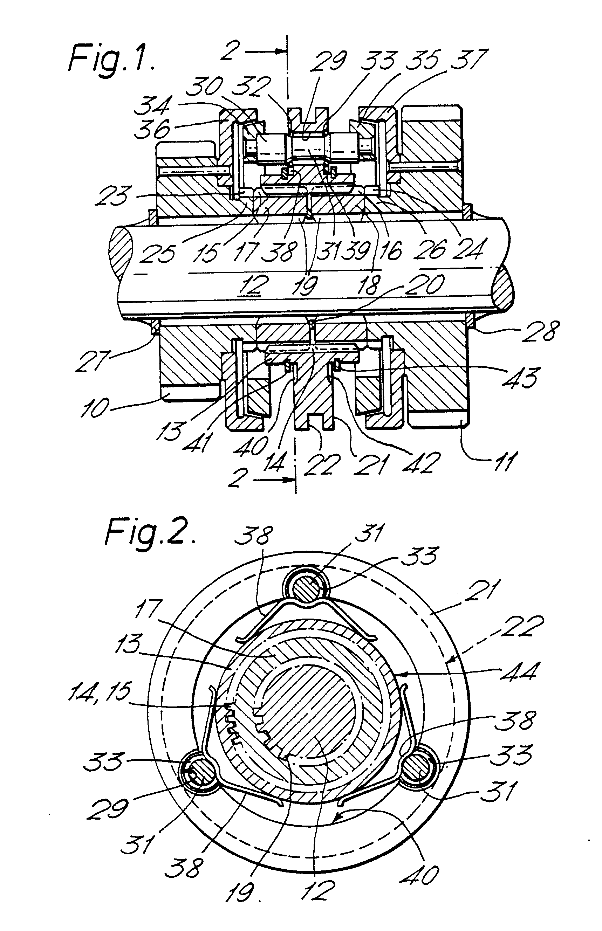

Referring now to Figs. 1 and 2, a preferred embodiment of synchromesh clutch for a vehicle stepped ratio-change gearbox is of the double-ended kind adapted to be disposed between two gears 10 and 11 rotateably mounted on a shaft 12 and to be moveable, by a selector fork actuated by a gear change lever (neither of which is shown), from a central neutral position shown in Fig. 1 into one operative position in which it driveably connects the gear 10 to the shaft 12 or another operative position in which it driveably connects the gear 11 to the shaft 12. The clutch comprises a sleeve 13 having internal clutch teeth 14 adapted to engage slideably with external clutch teeth 15 and 16 on a pair of hubs 17 and 18 mounted on splines 19 on the shaft 12 and located by a circlip 20 disposed between them in an intermittent annular groove in said splines. The sleeve 13 has an external flange 21 with a peripheral groove 22 adapted to be engaged by the selector fork, which can thus cause the clutch teeth 14 in the sleeve 13 to engage either with external clutch teeth 23 formed integrally on that side adjacent the clutch of the gear 10 or with external clutch teeth 24 formed integrally on that side adjacent the clutch of the gear 11. Bosses 25 and 26 on the respective gears 10 and 11 upon which the external clutch teeth 23 and 24 are formed have their end faces held in relatively rotateable contact with the end faces of the respective hubs 17 and 18 by circlips 27 and 28 disposed in annular grooves in the shaft 12 at the ends of the gears 10 and 11 remote from the clutch. Three holes 29 which are equally spaced on a common pitch circle pass through the flange 21 and are provided with chamfered ends. Each of the holes 29 houses slideably with significant clearance a pin 30 having a central portion 31 of reduced diameter, for example the full diameter of the pins being 0.022" less than the diameter of the holes 29. The ends of each portion 31 of reduced diameter are chamfered to form balking shoulders 32 and 33 which are the same distance apart as the chamfers at the ends of the holes 29 in the flange. Two annular male cone clutch elements 34 and 35 are rigidly secured to the respective ends of the pins 30, and are adapted to be engageable with respective female cone clutch elements 36 and 37 each of which is rigidly secured to that side adjacent the clutch of one of the gears 10 and 11. The sleeve 13 is provided with two plain annular grooves dis-

2

posed in the same planes as the chamfers at the ends of the holes 29 in the flange 21, and said grooves house respective sets 38 and 39 of three substantially W-shaped springs. The respective walls of one of said grooves are defined by the end face of an undercut 40 turned in the flange 21 and the adjacent end face of a circlip 41 projecting radially from one groove in the sleeve 13, and the respective walls of the other of said grooves are defined by the end face of an undercut 42 turned in the flange 21 and the adjacent end face of a circlip 43 projecting radially from another groove in the sleeve 13. The central depression of each of the springs 38 and 39 engages one of the balking shoulders 32 and 33, and the ends of each of the springs 38 and 39 engage the base 44 of the associated plain annular groove as shown in Fig. 2 whereby the springs 38 and 39 can float circumferentially. This allows limited circumferential floating of the male cone clutch elements 34 and 35 which results in faster synchronisation and thus a "cleaner" gear change. The assembly consisting of the pins 30 and the male cone clutch elements 34 and 35 is supported solely by the springs 38 and 39, and in addition to the aforementioned clearance between the full diameter portions of the pins 30 and their associated holes 29 there is a large radial clearance between the outer peripheries of the circlips 41 and 43 which project from the grooves in the sleeve 13 and the full diameter portions of the pins 30 and also a large radial clearance between those portions of the sleeve 13 axially outboard of the circlips 41 and 43 and the bores of the male cone clutch elements 34 and 35. Accordingly, no binding can occur in the event of tilting of said assembly and so the effort applied to the gear change lever is all directed to synchronisation and thus kept to a minimum.

In operation, the gears 10 and 11 are constantly driven and when either of them is to be driveably connected to the shaft 12 the selector fork is urged in the appropriate direction by the gear change lever. This moves the sleeve 13, and with it the springs 38 and 39, the pins 30 and the male cone clutch elements 34 and 35, in said direction until the appropriate one of said elements contacts the adjacent one of the female cone clutch elements 36 and 37. The assembly consisting of the pins 30 and the male cone clutch elements 34 and 35 is then moved circumferentially relative to the sleeve 13 by the frictional drag, as a result of which the appropriate balking shoulders 32 or 33 on the pins 30 contact the chamfered edges of the adjacent ends of the holes 29 in the flange 21 and prevent further movement of the sleeve 13 until synchronisation has been substantially achieved and the force tending to move said assembly circumferentially has thus substantially disappeared. The sleeve 13 can then be moved further towards the required gear 10 or 11, partially flattening the set of springs 38 or 39 adjacent said gear into their groove as their central depressions are caused to ride over the associated balking shoulders 32 or 33 and engage the adjacent full diameter portions of the pins 30, so that the teeth 14 in the sleeve 13 engage the external clutch teeth 23 or 24 on said gear to connect said gear driveably to the shaft 12.

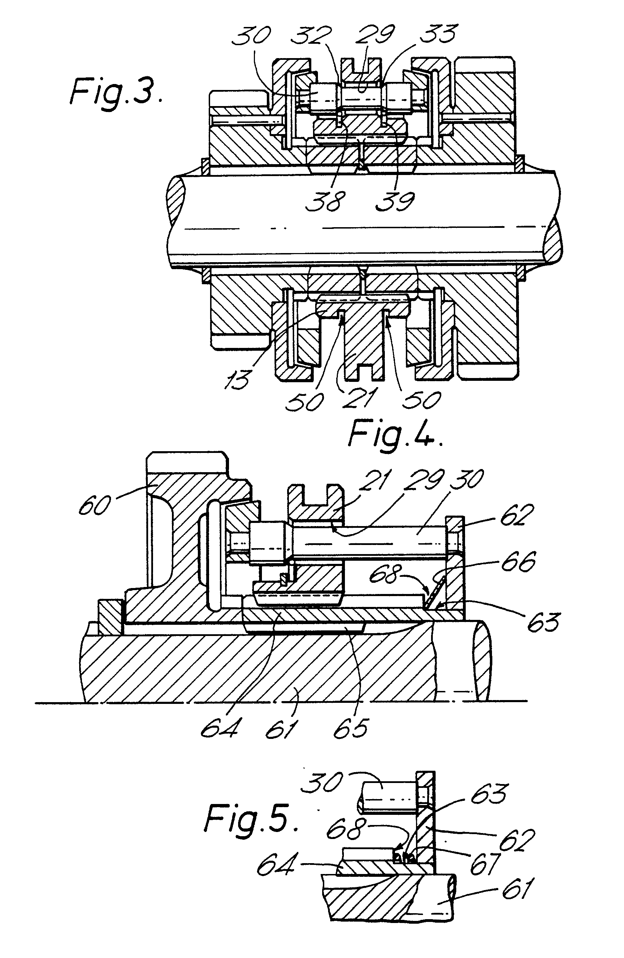

Referring now to Fig. 3, another embodiment of synchromesh clutch for a vehicle stepped ratio-change gearbox differs only in that plain annular grooves 50 housing the springs 38 and 39 are formed integrally in the sleeve 13, one immediately on each side of the flange 21 thereon; in that the undercuts 40 and 42 are omitted from the flange 21; and in that the balking shoulders 32 and 33 on the pins 30, which are engaged by the springs 38 and 39 in the grooves 50, are the same distance apart as said grooves. Such integral grooves 50 are cheaper to produce but do not provide as "clean" a gear change and the plain annular grooves of the preferred embodiment shown in Figs. 1 and 2, due to their disposition, and thus the disposition of the respective sets of springs 38 and 39, in slightly different planes to those occupied by the chamfers at the ends of the holes 29 in the flange 21.

Referring now to Figs. 45 and 5, in a modification of either of the embodiments hereinbefore described, the synchromesh clutch is made single-ended in known manner so as to be capable of connecting only a single gear 60 to a shaft 61. The friction clutch element 35 secured to that end of each pin 30 remote from the gear 60 is replaced by an annular plate 62 secured to said end of each pin 30 and slideable on a reduced diameter portion 63 of a hub 64 mounted on splines 65 on the shaft 61. The springs 39 are replaced by a resilient device, comprising at least one Belleville washer 66 (see Fig. 4) or alternatively a helical compression spring 67 (see Fig. 5), confined co-oxially of the shaft 61 between the annular plate 62 and a shoulder 68 formed by the reduced diameter portion 63 on the hub 64 to provide the restoring force necessary for returning the pins 30 to their centralised positions in the holes 29 in the flange 21.

In another modification (not illustrated) of either of the embodiments hereinbefore described, the mating friction surfaces of the clutch elements are plane instead of conical.

## Claims

1. A synchromesh clutch for a vehicle stepped ratio-change gearbox comprising a sleeve (13) having internal clutch teeth (14) adapted to engage slideably with external clutch teeth (15) on hub means (17 or 64) fixed to a shaft (12 or 61) and to be engageable with external clutch teeth (23) on a gear (10 or 60) rotateable on the shaft, an external flange (21) on the sleeve (13) having a peripheral groove (22) adapted to be engaged by a selector fork, a plurality of circumferentially-spaced holes (29) through the flange, a plurality of pins (30) each of which passes with clearance through one of the holes and has a reduced diameter portion (31) defining a balking shoulder (32) capable of contacting the edge of that end of the associated hole adjacent the gear, a friction clutch element (34) fixed to those ends of the pins (30) adjacent the gear and adapted to be engageable with a mating friction clutch element (36) fixed to the gear (10 or 60), and a set of substantially W-shaped springs (38) the central depression of each of which engages one of the balking shoulders (32), characterised in that the ends of each of said springs (38) engage the base (44) of a plain annular groove in the sleeve so that the springs can float circumferentially.

2. A synchromesh clutch according to claim 1, further characterised in that respective walls of the plain annular groove are defined by the end face of an undercut (40) in the external flange (21) on the sleeve (13) and the adjacent end face of a circlip (41) projecting radially from a groove in the sleeve.

3. A synchromesh clutch according to claim 1, further characterised in that the plain annular groove is formed integrally in the sleeve, immediately alongside the external flange thereon.

4. A synchromesh clutch according to any one of the preceding claims, further characterised in that it is double-ended whereby the teeth (14) on the sleeve (13) are adapted to be engageable with external clutch teeth (24) on another gear (11) rotateable on the shaft (12) at the opposite end of the clutch to the aforementioned gear (10), each of the pins (30) has two oppositely-facing balking shoulders (32 and 33) capable of contacting the edges of the opposite ends of the associated hole (29), another clutch element (35) is fixed to those ends of the pins (30) adjacent the other gear (11) and is adapted to be engageable with a mating clutch element (37) fixed to the other gear (11), and another set of substantially W-shaped springs (39) engage those balking shoulders (33) adjacent the other gear (11) and the base of another plain annular groove in the sleeve.

5. A synchromesh clutch according to any one of the preceding claims, further characterised in that the clutch elements have mating conical friction surfaces.

**Patentansprüche**

1. Synchronkupplung für ein Stufenschaltgetriebe eines Fahrzeugs, mit einer Hülse (13), die innere Kupplungszähne (14) zum gleitbaren Ineinandergreifen mit äußeren Kupplungszähnen (15) an einer an einer Welle (12 oder 61) befestigten Nabeneinrichtung (17 oder 64) und zum Ineinandergreifen mit äußeren Kupplungszähnen (23) an einem auf der Welle drehbaren Zahnrad (10 oder 60) hat, einem äußeren Flansch (21) an der Hülse (13), der eine Nut (22) am Rand zum Eingreifen durch eine Wählgabel hat, einer Vielzahl von in Umfangsrichtung beabstandeten Bohrungen (29) durch den Flansch, einer Vielzahl von Stiften (30), von denen jeder mit Spiel durch eine der Bohrungen hindurchgeht und einen Abschnitt (31) mit vermindertem Durchmesser hat, der eine Auskeilschulter (32) bildet, die den Rand von demjenigen Ende der zugehörigen Bohrung berühren kann, das neben dem Zahnrad ist, einem Reibungskupplungselement (34) das an denjenigen Enden der Stifte (30) befestigt ist, die neben dem Zahnrad sind, und das mit einem passenden Reibungskupplungselement (36), das an dem Zahnrad (10 oder 60) befestigt ist, in Eingriff bringbar ist, und einem Satz von im wesentlichen W-förmigen Federn (38), deren jeweilige mittlere Vertiefung an einer der Auskeilschultern (32) angreift, dadurch gekennzeichnet, daß die Enden jeder Feder (38) an dem Boden (44) einer ebenen, ringförmigen Nut in der Hülse angreifen, so daß sich die Federn in Umfangsrichtung bewegen können.

2. Synchronkupplung nach Anspruch 1, dadurch gekennzeichnet, daß die jeweiligen Wände der ebenen, ringförmigen Nut durch die Endfläche einer Hinterschneidung (40) in dem äußeren Flansch (21) an der Hülse (13) und der benachbarten Endfläche eines Sicherungsringes (41) gebildet werden, der aus einer Nut in der Hülse radial vorsteht.

3. Synchronkupplung nach Anspruch 1, dadurch gekennzeichnet, daß die ebene, ringförmige Nut einstückig mit der Hülse unmittelbar entlang des äußeren Flansches an ihr ausgebildet ist.

4. Synchronkupplung nach einem der vorhergehenden Ansprüche, dadurch gekennzeichnet, daß sie zwei Enden hat, wobei die Zähne (14) an der Hülse (13) mit äußeren Kupplungzähnen (24) an einem anderen Zahnrad (11) in Eingriff bringbar sind, das auf der Welle (12) an dem zu dem vorgenannten Zahnrad (10) entgegengesetzten Ende der Kupplung drehbar ist, wobei jeder Stift (30) zwei entgegengesetzt weisende Auskeilschultern (32 und 33) hat, welche die Ränder der entgegengesetzten Enden der zugehörigen Bohrung (29) berühren können, wobei ein weiteres Kupplungselement (35) an denjenigen Enden der Stifte (30) befestigt ist, die neben dem anderen Zahnrad (11) sind, und mit einem passenden Kupplungselement (37), das an dem anderen Zahnrad (11) befestigt ist, in Eingriff bringbar ist, und wobei ein weiterer Satz von im wesentlichen W-förmigen Federn (39) an denjenigen Auskeilschultern (33), die neben dem anderen Zahnrad (11) sind, und dem Boden einer weiteren ebenen, ringförmigen Nut in der Hülse angreift.

5. Synchronkupplung nach einem der vorhergehenden Ansprüche, dadurch gekennzeichnet, daß die Kupplungselemente zusammenpassende kegelförmige Reibungsflächen haben.

**Revendications**

1. Embrayage à vitesses synchronisées pour une boîte de vitesses à changement de rapport échelonné de véhicule, cet embrayage comprenant un manchon (13) pourvu de dents d'embrayage intérieures (14) conçues pour venir s'engager par glissement dans des dents d'embrayage extérieures (15) d'un moyeu (17 ou 64) fixé à un arbre (12 ou 61), ainsi que pour pouvoir venir s'engager dans des dents d'embrayage extérieures (23) d'un engrenage (10 ou 60) pouvant tourner sur l'arbre, une bride extérieure (21) formée sur le manchon (13) et comportant une gorge périphérique (22) conçue pour recevoir une fourchette de sélection, plusieurs trous espacés circonférentiellement (29) pratiqués dans la bride, plusieurs broches (30) passant chacune avec un certain jeu à travers un des trous et comportant une partie de diamètre réduit (31) définissant un épaulement d'entrave (32) pouvant entrer en contact avec le bord de l'extrémité du trou associé qui est adjacente à l'engrenage, un élément d'embrayage à friction (34) fixé aux extrémités des broches (30) qui sont adjacentes à l'engrenage, cet élément d'embrayage à friction (34) étant conçu pour pouvoir être mis en prise avec un élément d'embrayage à friction correspondant (36) fixé à l'engrenage (10 ou 60), ainsi qu'un jeu de ressorts à configuration pratiquement en W (38), le creux central de chacun de ces ressorts venant s'engager sur un des épaulements d'entrave (32), caractérisé en ce que les extrémités de chacun des ressorts (38) viennent s'engager sur la base (44) d'une gorge annulaire lisse ménagée dans le manchon, de telle sorte que les ressorts puissent flotter circonférentiellement.

2. Embrayage à vitesses synchronisées selon la revendications 1, caractérisé en ce que les parois respectives de la gorge annulaire lisse sont définies par la face en bout d'une dépouille (40) pratiquée dans la bride extérieure (21) du manchon (13), ainsi que par la face en bout adjacente d'une bague à ressort (41) ressortant radialement d'une gorge ménagée dans le manchon.

3. Embrayage à vitesses synchronisées selon la revendication 1, caractérisé en ce que la gorge annulaire lisse est formée solidairement dans le manchon, immédiatement le long de la bride extérieure de ce dernier.

4. Embrayage à vitesses synchronisées selon l'une quelconque des revendications précédentes, caractérisé en ce qu'il est du type à deux extrémités, de telle sorte que les dents (14) formées sur le manchon (13) soient conçues pour venir s'engager dans des dents d'embrayage extérieures (24) dont est pourvu un autre engrenage (11) pouvant tourner sur l'arbre (12) à l'extrémité de l'embrayage qui est opposée à l'engrenage mentionné en premier lieu (10), chacune des broches (30) comportant deux épaulements d'entrave qui se font face (32 et 33) pouvant entrer en contact avec les bords des extrémités opposées du trou associé (29), un autre élément d'embrayage (35) étant fixé aux extrémités des broches (30) qui sont adjacentes à l'autre engrenage (11), cet élément d'embrayage (35) étant conçu pour pouvoir être mis en prise avec un élément d'embrayage correspondant (37) fixé à l'autre engrenage (11) tandis qu'un autre jeu de ressorts à configuration pratiquement en W (39) viennent s'engager sur les épaulements d'entrave (33) qui sont adjacents à l'autre engrenage (11), ainsi que sur la base d'une autre gorge annulaire lisse ménagée dans le manchon.

5. Embrayage à vitesses synchronisées selon l'une quelconque des revendications précédentes, caractérisé en ce que les éléments d'embrayage comportent des surfaces de friction coniques correspondantes.

0 138 378

Fig.1.

Fig.2.

1

**Fig.3.**

**Fig.4.**

**Fig.5.**